# EUROPEAN PATENT APPLICATION

(11) **EP 1 469 043 A2**
(43) Date of publication of application: **20.10.2004**
(21) Application number: 04003430.8
(22) Date of filing: 16.02.2004
(51) Int. Cl.: C09C 1/40, C09C 3/06, C08K 9/02, C08L 23/02

(54) **Metal hydroxide, method for producing the same, and resin composition comprising the same**

(30) Priority: 18.02.2003 JP 2003039502
(71) Applicant: Sumitomo Chemical Company, Limited, Chuo-ku Osaka 541-8550 (JP)
(72) Inventor: Takemura, Kazuki, Niihama-shi Ehime (JP)
(74) Representative: VOSSIUS & PARTNER

(57) **Abstract**

A metal hydroxide, method for producing the same, and resin composite obtained by using the metal hydroxide are described, The metal hydroxide comprises aluminum hydroxide and a compound composed of a transition metal and oxygen wherein the compound composed of a transition metal and oxygen is present on the surface thereof. The method for producing a metal hydroxide comprises a step of adding a base to aqueous liquid of aluminum hydroxide and a transition metal salt.

## Description

The present invention relates to a metal hydroxide, and a method for producing the same. Further, the present invention relates to a resin composition obtained by using the metal hydroxide.

Aluminum hydroxide is known as a flame retardant for resin. For example, JP-A- 06-041441, 52-029839 and 52-121058 disclose flame retardant resin compositions comprising aluminum hydroxide and a thermoplastic resin.

However, these resin compositions have no sufficient flame retardancy, and particularly, have an insufficient self-extinguishing property.

It is an object of the present invention to provide a flame retardant imparting sufficient flame retardancy to a resin. This object is solved by the invention.

The present invention provides a metal hydroxide comprising aluminum hydroxide and a compound composed of a transition metal and oxygen wherein the compound composed of a transition metal and oxygen is present on the surface thereof.

The present invention also provides a method for producing a metal hydroxide comprising a step of adding a base to aqueous liquid of aluminum hydroxide and a transition metal salt.

Further, the present invention provides a resin composition comprising the above-mentioned metal hydroxide and a thermoplastic resin.

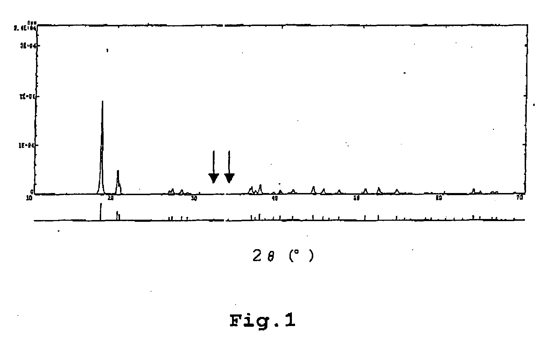

Fig. 1 shows an X-ray diffraction spectrum of a metal hydroxide obtained in Example 1.

The metal hydroxide of the present invention comprises aluminum hydroxide and a compound composed of a transition metal and oxygen (hereinafter, referred to as transition metal compound). This aluminum hydroxide is usually a particle represented by the formula Al(OH)₃ or AlOOH, and has a crystal structure of, for example, Gibbsite, Bayerite, Boehmite, Norstrandite or Diaspore, preferably Gibbsite or Bayerite.

It is preferable that the transition metal compound is present on the surface of the aluminum hydroxide. Listed as the transition metal of the transition metal compound are, for example, VII group elements such as manganese and technetium, VIII group elements such as iron and ruthenium and IX group elements such as cobalt, rhodium and iridium, in the periodic table, and preferable are manganese, iron and cobalt, further preferable is manganese. The transition metal compound is usually an inorganic compound, and specific examples thereof include hydroxides such as manganese hydroxide [Mn(OH)₂, Mn₂O₃·H₂O], iron hydroxide [Fe(OH)₂, Fe(OH)₃] and cobalt hydroxide [Co(OH)₂, Co(OH)₃], and oxides such as manganese oxide [MnO, Mn₂O₃, MnO₂], iron oxide [FeO, Fe₂O₃] and cobalt oxide [CoO, Co₂O₃]. These one or more hydroxides and oxides or combinations of the hydroxides and oxides may be used. The amount of a transition metal of a transition metal compound in a metal hydroxide is usually 0.2% or more, preferably 0.5 % or more in terms of atomic ratio, and usually 10% or less, preferably 5% or less, based on aluminum of aluminum hydroxide contained therein. A metal hydroxide in which the amount of a transition metal compound is in the above-mentioned range can impart higher flame retardancy, when kneaded with a resin, to the resulting resin composition. It is preferable that the transition metal in a transition metal compound is not substantially contained in the aluminum hydroxide particle. The transition metal content of aluminum hydroxide particle is preferably 0.1 wt% or less. For example, in case that manganese hydroxide is a metal hydroxide present on the surface, it is preferable that the manganese content of aluminum hydroxide particle is 0.1 wt% or less.

The metal hydroxide of the present invention has an average particle diameter of usually about 0.1 µ m or more, preferably about 0.5 µm or more, and usually about 15 µ m or less, preferably about 10 µ m or less. When the average particle diameter of a metal hydroxide is in the above-mentioned range, a handling may be improved, and further, kneading with a resin may be easy. In the metal hydroxide of the present invention, it is preferable that the proportion of particles having a particle diameter larger than 45 µm is 0.1 wt% or less based on the total amount of the metal hydroxide, and it is further preferable that such particles are not substantially contained.

It is preferable that the metal hydroxide of the present invention has a peak at 2 θ = 32-35° or 60-63° of X-ray spectrum when measured by an X-ray diffractometer. Any peak in the above range is not inherent in transition metal compound such as Mn(OH)₂.

The metal hydroxide of the present invention may be usually prepared advantageously by a method comprising a step of adding a base to aqueous liquid of aluminum hydroxide and a transition metal salt.

In this method, aluminum hydroxide having the same crystal structure as that of aluminum hydroxide contained in the metal hydroxide is usually used as a raw material. As the raw material of aluminum hydroxide, those having average particle diameter approximately equivalent to or less than the average particle diameter of the resulting metal hydroxide can be used, and its average particle diameter is usually 0.1 µm or more, preferably 0.5 µm or more, and usually 15 µm or less, preferably 10 µm or less. As the raw material, commercially available aluminum hydroxide may be used providing the above-mentioned properties are satisfied.

The transition metal salt is, for example, a chloride, nitrate or sulfate, specific examples thereof include manganese chloride, technetium chloride, iron chloride, ruthenium chloride, cobalt chloride, rhodium chloride, iridium chloride, manganese nitrate, technetium nitrate, iron nitrate, ruthenium nitrate, cobalt nitrate, rhodium nitrate, iridium nitrate, manganese sulfate, technetium sulfate, iron sulfate, ruthenium sulfate, cobalt sulfate, rhodium sulfate and iridium sulfate, preferably manganese chloride, iron chloride, cobalt chloride, manganese nitrate, iron nitrate, cobalt nitrate, manganese sulfate, iron sulfate and cobalt sulfate, further preferably manganese chloride, manganese nitrate and manganese sulfate. The concentration of a transition metal salt in an aqueous solution is usually 0.01 mol/kg or more, preferably 0.1 mol/kg or more, and 5 mol/kg or less, preferably 2 mol/kg or less. The term "mol/kg" indicates the amount (mol) of a salt contained in 1 kg of an aqueous solution.

The aqueous liquid of aluminum hydroxide and a transition metal salt may be advantageously prepared by, for example, a method of mixing aluminum hydroxide with an aqueous solution of a transition metal salt, or a method of mixing aluminum hydroxide with a transition metal salt, then, mixing water therewith. The aqueous liquid of aluminum hydroxide and a transition metal salt is usually in the form of slurry and is an aqueous solution in which the solid phase is aluminum hydroxide and the liquid phase is an aqueous solution of a transition metal salt. The aqueous solution of a transition metal salt in liquid phase is usually acidic or neutral.

As the base added to the above-mentioned aqueous liquid, inorganic bases and organic bases are listed, and examples thereof include sodium hydroxide, potassium hydroxide, sodium aluminate and ammonia. Addition of a base is preferably conducted while stirring the aqueous liquid. By stirring, a transition metal compound is formed uniformly on the surface of aluminum hydroxide. Addition is conducted usually at temperatures from about 0 to 100°C, preferably from 10 to 50°C, for about 10seconds to 1 hour, preferably 30seconds to 5 minutes.

In the above-mentioned method for producing a metal hydroxide, it is usual that a base is added, then, solid is recovered by solid-liquid separation, and the resulted solid is dried. Solid-liquid separation may be conducted, for example, by filtration and centrifugal separation. Drying may be conducted, for example, by heat transfer drying, fluidized-bed drying or freeze-drying. Drying may be advantageously conducted under conditions giving the intended metal hydroxide, and drying is conducted at temperatures usually of about 0°C or more, preferably 100°C or more and usually of 200°C or less, preferably 150°C or less. When the drying temperature is too high, a hydroxide (for example, aluminum hydroxide, manganese hydroxide, iron hydroxide, cobalt hydroxide) contained in solid to be recovered may be dehydrated to give an oxide in some cases.

The resin composition of the present invention comprises the above-mentioned metal hydroxide and a thermoplastic resin.

The thermoplastic resin is, for example, a polydlefin such as polypropylene, polyethylene, ethylene-propylene copolymer, ethylene-1-butene copolymer, ethylene-propylene-conjugated diene copolymer, ethylene-ethyl acrylate copolymer, ethylene-glycidyl methacrylate copolymer, ethylene-vinyl acetate-glycidyl methacrylate copolymer, ethylene-propylene-maleic anhydride copolymer; a styrene resin such as polystyrene, styrene-acrylonitrile copolymer, acrylonitrile-butadiene-styrene copolymer (ABS); a polyester resin such as polyethylene terephthalate, or a polycarbonate resin, polyamide resin, polyphenylene oxide resin, modified polyphenylene oxide resin, polyphenylene sulfide resin, polyoxymethylene resin, polyester polyether elastomer or polyester polyester elastomer, and preferably, a polyolefin.

The content of the metal hydroxide is usually 5 parts by weight or more and 250 parts by weight or less, preferably 150 parts by weight or less, based on 100 parts by weight of a thermoplastic resin.

The resin composition of the present invention can be produced, for example, by a method of melt-kneading the above-mentioned thermoplastic resin with the above-mentioned metal hydroxide. Melt-kneading may be conducted using a commercially available kneader. The lower limit of the melt-kneading temperature is the melt temperature of a thermoplastic resin used, and usually about 150°C. On the other hand, the upper limit of the melt-kneading temperature is lower one of the decomposition temperature of a thermoplastic resin and the dehydration initiation temperature of a metal hydroxide, and usually about 200°C. Production of a resin composition may be conducted e.g. by a method of mixing a metal hydroxide with a thermoplastic resin (for example, pellet) at a temperature lower than the melt temperature, and heating this mixture to a temperature of not lower than the melt temperature of the thermoplastic resin for melt-kneading, or a method of heating a thermoplastic resin at temperature not lower than the melt temperature, and adding a metal hydroxide to the melted thermoplastic resin for melt-kneading.

### EXAMPLE

The following example will illustrate the present invention in more detail, but does not limit the scope of the invention. The properties of aluminum hydroxide and metal hydroxide were measured by the following methods. Average particle diameter (µm), proportion of particles having particle diameter of larger than 45 µm (wt%):

Measured by using a laser diffraction particle size analyzer.

### X-ray diffraction spectrum:

Measured using an X-ray diffractometer (trade name "RAD-RB RU-200" , manufactured by Rigaku Denki) under conditions of target: Cu, voltageXcurrent: 40 kVX30 mA, slit: DS 1° -SS 1° -RS 0.3mm, Scan mode: continuous, Scan speed: 2° /min, Scan Step: 0.010° /step, Scan axis: 2θ/θ, Scan range: 10-70° .

### Example 1

### [Production of metal hydroxide]

1000 g of aluminum hydroxide (average particle diameter: 1. 4 µ m, proportion of particles having particle diameter of larger than 45 µm: 0 wt%, crystal structure: Gibbsite, manganese content: 0 wt%) and 2000 g of water were mixed. To this mixture was added 276 g of a manganese chloride aqueous solution having a concentration of 1.4 mol/kg and 230 g of sodium hydroxide aqueous solution having a concentration of 3.3 mol/kg while stirring under conditions of a feed rate of 276 g/min and 230 g/min, respectively, and a temperature of 25°C, to deposit manganese hydroxide on the surface of aluminum hydroxide. The resulted slurry was filtrated, and the recovered solid was dried at 120°C, to obtain 1025 g of a metal hydroxide. In this metal hydroxide, the amount of manganese was 1.7% in terms of atomic ratio based on aluminum, the average particle diameter thereof was 1.4 µ m, and the proportion of particles having particle diameter of larger than 45 µ m was 0 wt%. The metal hydroxide has a peak at 2 θ = 32° and 34° of X-ray diffraction spectrum as shown in Fig. 1.

### [Production and evaluation of resin composition]

100 parts by weight of polypropylene (trade name: "AY-161C" , manufactured by Sumitomo Chemical Co., Ltd.) and 120 parts by weight of the metal hydroxide obtained above were melt-kneaded at 180°C and palletized to obtain a resin composition. This resin composition was heat-molded by using a heat press-molding machine, to produce a specimen having a length of 5 inch (about 13 cm) , a width of 1/2 inch (about 1.25 cm) and a thickness of 1/8 inch (about 3.2 mm). This specimen was subjected to a vertical combustibility test of UL-94 standard. The burning time was 26 seconds in this test.

While an example of producing a metal hydroxide containing aluminum hydroxide and, manganese hydroxide on its surface, and an example of producing a resin composition containing this metal hydroxide and polypropylene have been shown above, metal hydroxides containing a transition metal other than manganese can also be produced under the same conditions. Thermoplastic resins other than propylene can also be produced under the same conditions, and have the equivalent flame retardancy to that of the resin composition in Example 1.

### Comparative Example 1

The same operation as in Example 1 [production of metal hydroxide] was conducted, except that aluminum hydroxide (trade name "C-301" , manufactured by Sumitomo Chemical Co., Ltd. ) was used instead of the metal hydroxide, to obtain a resin composition. This resin composition was subjected to the same operation as in Example 1 [production and evaluation of resin composition]. A specimen was completely burnt, and was not extinguished on the way.

### Comparative Example 2

The same operation as in Example 1 [production of metal hydroxide] was conducted, except that a mixture of 116 parts by weight of aluminum hydroxide (trade name "C-301" , manufactured by Sumitomo Chemical Co., Ltd.) and 4 parts by weight of manganese dioxide (trade name "FHN-S" , purity: 93%, average particle diameter: 21 µm) was used instead of the metal hydroxide. A specimen was completely burnt, and was not extinguished on the way.

## Claims

1. A metal hydroxide comprising aluminum hydroxide and a compound composed of a transition metal and oxygen wherein the compound composed of a transition metal and oxygen is present on the surface thereof.

2. The metal hydroxide according to Claim 1, wherein the aluminum hydroxide is at least one selected from Gibbsite, Bayerite, Boehmite, Norstrandite and Diaspore.

3. The metal hydroxide according to Claim 1 or 2, wherein the transition metal is at least one selected from manganese, technetium, iron, ruthenium, cobalt, rhodium and iridium.

4. The metal hydroxide according to Claim 3, wherein the transition metal is at least one selected from manganese, iron and cobalt.

5. The metal hydroxide according to Claim 1 or 2, wherein the compound composed of a transition metal and oxygen is at least one selected from manganese hydroxide, technetium hydroxide, iron hydroxide, ruthenium hydroxide, cobalt hydroxide, rhodium hydroxide, iridium hydroxide, manganese oxide, technetium oxide, iron oxide, ruthenium oxide, cobalt oxide, rhodium oxide and iridium oxide.

6. The metal hydroxide according to Claim 5, wherein the compound composed of a transition metal and oxygen is at least one selected from manganese hydroxide, iron hydroxide, cobalt hydroxide, manganese oxide, iron oxide and cobalt oxide.

7. The metal hydroxide according to Claim 1, wherein the amount of a transition metal in the compound composed of a transition metal and oxygen is 0.2-10% in terms of atomic ratio based on aluminum in aluminum hydroxide.

8. The metal hydroxide according to Claim 1, wherein the average particle diameter is 0.1-15µm.

9. A method for producing a metal hydroxide comprising a step of adding a base to aqueous liquid of aluminum hydroxide and a transition metal salt.

10. The method according to Claim 9, wherein the transition metal salt is at least one selected from a manganese salt, technetium salt, iron salt, ruthenium salt, cobalt salt, rhodium salt and iridium salt.

11. The method according to Claim 10, wherein the transition metal salt is at least one selected from chlorides, nitrates and sulfates.

12. The method according to Claim 11, wherein the transition metal salt is at least one selected from manganese chloride, technetium chloride, iron chloride, ruthenium chloride, cobalt chloride, rhodium chloride, iridium chloride, manganese nitrate, technetium nitrate, iron nitrate, ruthenium nitrate, cobalt nitrate, rhodium nitrate, iridium nitrate, manganese sulfate, technetium sulfate, iron sulfate, ruthenium sulfate, cobalt sulfate, rhodium sulfate and iridium sulfate.

13. A resin composition comprising a thermoplastic resin and the metal hydroxide according to Claim 1.

14. The resin composition according to Claim 13, wherein the thermoplastic resin is at least one selected from polyolefin, styrene resin, polyester resin, polycarbonate resin, polyamide resin, polyphenylene oxide resin, modified polyphenylene oxide resin, polyphenylene sulfide resin, polyoxymethylene resin, polyester polyether elastomer and polyester polyester elastomer.

15. The resin composition according to Claim 14, wherein the thermoplastic resin is a polyolefin.

16. The resin composition according to Claim 13, wherein the amount of the metal hydroxide is 5-250 parts by weight based on 100 parts by weight of the thermoplastic resin.
